# EUROPÄISCHE PATENTSCHRIFT

(11) **EP 3 882 568 B1**
(45) Veröffentlichungstag und Bekanntmachung des Hinweises auf die Patenterteilung: **06.07.2022**
(21) Anmeldenummer: 20163348.4
(22) Anmeldetag: 16.03.2020
(51) Int. Cl.: G01B 21/04, G05B 19/4097

(54) **COMPUTERIMPLEMENTIERTES VERFAHREN ZUM AUTOMATISCHEN ERSTELLEN EINES PRÜFPLANS UND ENTSPRECHENDES COMPUTERPROGRAMM, COMPUTERPROGRAMMPRODUKT UND KOORDINATENMESSGERÄT**
COMPUTER-IMPLEMENTED METHOD FOR AUTOMATICALLY CREATING A MEASUREMENT PLAN AND CORRESPONDING COMPUTER PROGRAM, COMPUTER PROGRAM PRODUCT AND COORDINATE MEASURING MACHINE
PROCÉDÉ MIS EN OEUVRE PAR ORDINATEUR PERMETTANT D'ÉTABLIR AUTOMATIQUEMENT UN PLAN DE MESURE ET PROGRAMME INFORMATIQUE, PRODUIT PROGRAMME INFORMATIQUE ET MACHINE DE MESURE DE COORDONNÉES CORRESPONDANTS

(43) Veröffentlichungstag der Anmeldung: 22.09.2021
(73) Patentinhaber: Carl Zeiss Industrielle Messtechnik GmbH, 73447 Oberkochen (DE)
(72) Erfinder: Guth, Thomas, 73431 Aalen (DE); Fröwis, Annett, 73447 Oberkochen (DE); Huber, Birgit, 73431 Aalen (DE); Haas, Günter, 73432 Aalen (DE); Mayr Adam, Ana Carolina, 73430 Aalen (DE)
(74) Vertreter: Altmann Stößel Dick Patentanwälte PartG mbB

(56) Entgegenhaltungen:
- WO-A1-2016/150517
- WO-A1-2019/133234
- WO-A1-2019/219202
- DE-A1-102014 214 365

## Beschreibung

### Technisches Gebiet

Die Erfindung betrifft ein Computerimplementiertes Verfahren und ein Computerprogramm zum automatischen Erstellen mindestens eines Prüfplans sowie ein Messverfahren und ein Koordinatenmessgerät zur Vermessung mindestens eines Messobjekts gemäß dem Prüfplan. Die vorliegende Erfindung betrifft insbesondere das Gebiet der Koordinatenmesstechnik unter Verwendung eines Koordinatenmessgeräts mit einem beliebigen Sensor oder einem Computertomograph.

### Technischer Hintergrund

Aus dem Stand der Technik sind verschiedene Verfahren und Vorrichtungen zur Vermessung von Messobjekten, insbesondere eine Vermessung von Prüfmerkmalen von Geometrieelementen, bekannt. Üblicherweise folgen diese Verfahren dabei Prüfplänen, welche zuvor erstellt, beziehungsweise geschrieben, werden müssen. Der Prüfplan bestimmt unter anderem was und wie gemessen werden soll. Zur Erstellung von Prüfplänen wird üblicherweise ein CAD-Modell des Messobjekts in eine hierfür vorgesehene computerbasierte Entwicklungsumgebung importiert und dieses in einen Prüfplan umgesetzt. Beispielsweise kann die Messsoftware CALYPSO^{®} von ZEISS CAD-Datensätze automatisch in Prüfpläne umsetzen.

Bei einer Vielzahl von Geometrieelementen können die Geometrieelemente entweder jeweils einzeln erzeugt und jeweils als einzelnes Element im Prüfplan angelegt werden. Mess- und Auswertungsstrategien und Prüfmerkmale müssen auch dementsprechend einzeln eingestellt und zugewiesen werden.

Alternativ können die Geometrieelemente gemeinsam über ein Muster definiert werden.

Muster können insbesondere vorteilhaft sein, da nur eine der Geometrien bearbeitet werden muss und alle weiteren Geometrien über die Musterposition bestimmt werden. Im Prüfplan wird nur ein Element mit der Musterinformation angelegt. Mess- und Auswertungsstrategien können pro Muster eingestellt und zugewiesen werden. Derartige Muster werden in bekannten Verfahren und Vorrichtungen manuell erzeugt. Muster können zwar durch eine sogenannte Teilungsfunktion erzeugt werden. Allerdings sollen nicht immer alle Teilungspositionen, auch als Index bezeichnet, des Musters im Messablauf berücksichtigt werden, beispielsweise weil das CAD-Modell hier kein Merkmal vorsieht. Diese nicht benötigten Teilungspositionen müssen deshalb maskiert, bzw. gelöscht, werden. Diese Aktion kann bisher nur manuell durchgeführt werden. Dieses kann aufwendig und auch fehleranfällig sein. Insbesondere bei sehr vielen verwendeten Geometrieelementen, beispielweise mehreren tausend, und den dazugehörigen Prüfmerkmalen kann die Bearbeitung der Muster sehr unhandlich und zeitintensiv werden.

WO 2016/150517 A1 offenbart ein Verfahren zur Erstellung eines Prüfplans, wobei eine graphische Schnittstelle zur graphischen Darstellung eines CAD-Modells des Werkstücks und gleichzeitig zur Auswahl einer Mehrzahl von geometrischen Elementen und Merkmalen dem Benutzer zur Verfügung gestellt wird.

Aufgabe der Erfindung Es wäre daher wünschenswert, ein Computerimplementiertes Verfahren zur automatischen Erstellung eines Prüfplans, ein Computerprogramm, ein Messverfahren und ein Koordinatenmessgerät bereitzustellen, welche die Nachteile bekannter Verfahren und Vorrichtungen zumindest weitgehend vermeiden. Insbesondere soll ein Arbeits- und Zeitaufwand zur Erstellung eines Prüfplans reduziert und eine Fehleranfälligkeit bei der Erstellung des Prüfplans reduziert werden.

Allgemeine Beschreibung der Erfindung Diese Aufgabe wird adressiert durch Verfahren und Vorrichtungen mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein computerimplementiertes Verfahren zum automatischen Erstellen mindestens eines Prüfplans zur Vermessung mindestens eines Messobjekts vorgeschlagen.

Der Begriff "computerimplementiert", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Verfahren beziehen, welches mindestens einen Computer und/oder mindestens ein Computer-Netzwerk involviert. Der Computer und/oder das Computer-Netzwerk können mindestens einen Prozessor umfassen, wobei der Prozessor dazu eingerichtet ist, mindestens einen Verfahrensschritt des Verfahrens der Erfindung durchzuführen. Bevorzugt wird jeder der Verfahrensschritte jeweils von dem Computer und/oder dem Computer-Netzwerk durchgeführt.

Das Verfahren kann vollständig automatisch und im Speziellen ohne Benutzerinteraktion durchgeführt werden. Der Begriff "automatisch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess beziehen, welcher vollständig durch einen Computer und/oder ein Computer-Netzwerk und/oder eine Maschine insbesondere ohne Benutzerinteraktion und/oder manuelles Eingreifen durchgeführt wird. Eine Benutzerinteraktion kann erforderlich sein, um den Prozess einzuleiten.

Der Begriff "Prüfplan", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Spezifizierung mindestens einer Prüfung beziehen, insbesondere ein Ergebnis einer Prüfplanung. Die Prüfung kann beispielsweise eine Qualitätsprüfung sein. Der Prüfplan kann eine Mehrzahl von Elementen aufweisen, wie beispielsweise Prüfspezifikationen, Prüfanweisungen und Prüfablaufpläne. Die Prüfspezifikationen können Prüfmerkmale festlegen. Die Prüfanweisungen können Anweisungen für die Durchführung der Prüfung umfassen. Die Prüfablaufpläne können eine Abfolge der Prüfungen festlegen. Weiter kann der Prüfplan Information umfassen, welche eine Dokumentation der Prüfung bestimmen.

Der Begriff "Prüfmerkmal", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein zu bestimmenden und/oder zu überprüfendes und/oder zu testendes Merkmal mindestens eines Messelements beziehen. Ein Bestimmen und/oder Prüfen eines Prüfmerkmals kann ein Bestimmen und/oder Prüfen von Maßabweichungen und/oder Formabweichungen und/oder Lageabweichungen umfassen. Das Prüfmerkmal kann ein Merkmal sein ausgewählt aus der Gruppe bestehend aus: mindestens eine Länge; mindestens ein Winkelmaß, mindestens ein Oberflächenparameter, eine Form, eine Lage.

Der Begriff "Messelement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein vorbestimmtes oder vorbestimmbares geometrisches Element beziehen. Das Messelement kann beispielsweise ein Geometrieelement sein, ausgewählt aus der Gruppe bestehend aus einem Kreis, einem Zylinder, einem Rechteck, einer Gerade, oder einem anderen Element mit einer Regelgeometrie. Das Prüfmerkmal kann beispielsweise durch Messung von Punkten und/oder Linien und/oder Flächen des Messobjekts bestimmt und/oder überprüft werden.

Der Begriff "Messobjekt", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebig geformtes zu vermessendes Objekt beziehen. Beispielsweise kann das Messobjekt ausgewählt sein aus der Gruppe bestehend aus einem Prüfling, einem Werkstück und einem zu vermessenden Bauteil. Der Begriff "Vermessung eines Messobjekts", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Erfassung geometrischer Abmessungen des Objekts durch Positionsmessungen und/oder Distanzmessungen und/oder Winkelmessungen beziehen.

Das computerimplementierte Verfahren zum automatischen Erstellen mindestens eines Prüfplans umfasst folgende Schritte, welche, als Beispiel, in der folgenden Reihenfolge durchgeführt werden können. Weiterhin ist es möglich einen oder mehrere der Verfahrensschritte einmalig oder mehrmalig in wiederholender Form durchzuführen. Weiterhin ist es möglich zwei oder mehr der Verfahrensschritte simultan oder zumindest mit zeitlichem Überlapp durchzuführen. Das Verfahren kann zudem weitere Verfahrensschritte umfassen, welche nicht aufgelistet sind.

Das Verfahren umfasst die folgenden Schritte:
a) Bereitstellen eines Solldatensatzes des Messobjekts;
b) Bereitstellen eines Startmusters, wobei das Bereitstellen ein Erstellen einer Teilung umfasst, wobei das Erstellen der Teilung ein Anwenden mindestens einer Teilungsfunktion auf das Startmuster umfasst, wobei die Teilung eine Mehrzahl von Teilungsindizes aufweist;
c) Erstellen eines Zielmusters, wobei das Erstellen des Zielmusters einen Vergleich zwischen Solldatensatz und der Teilung umfasst, wobei bei einer Abweichung der Teilung von dem Solldatensatz mindestens ein Teilungsindex angepasst wird;
d) Anlegen mindestens eines Elements mit mindestens einer Musterinformation im Prüfplan entsprechend des Zielmusters.

Die Schritte a) bis d) können jeweils vollständig automatisch durchgeführt werden. Der Begriff "vollständig automatisch", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere darauf beziehen, dass die Schritte a) bis d) jeweils vollständig durch einen Computer und/oder ein Computer-Netzwerk und/oder eine Maschine insbesondere ohne Benutzerinteraktion und/oder manuelles Eingreifen durchgeführt wird. Eine Benutzerinteraktion kann erforderlich sein, um die einzelnen Schritte jeweils einzuleiten. Die Benutzerinteraktion kann das Auswählen von mindestens einem Datensatz und/oder das Eingeben mindestens eines Befehls umfassen.

Der Begriff "Solldatensatz", auch als Nominaldatensatz bezeichnet, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Datensatz beziehen, welcher Merkmale des realen Messobjekts möglichst genau repräsentiert. Der Solldatensatz kann aus mindestens einem Model des Messobjekts erzeugt werden und/oder kann mindestens ein Modell des Messobjekts umfassen. Das Modell des Messobjekts kann beispielsweise ein CAD-Modell sein und/oder umfassen. Das CAD-Modell kann dreidimensional oder zweidimensional sein. Das CAD-Modell kann zu Produkt- und Fertigungsinformationen des Messobjekts umfassen. Bei der Erstellung des Solldatensatz können, alternativ oder zusätzlich, Messdaten, beispielsweise aus einer Prüfung und/oder einer Erfassung mindestens eines Merkmals des Messobjekts mit einem Koordinatenmessgerät, und/oder Zusatzinformation zur Ausgestaltung des Messobjekts berücksichtigt werden.

Der Solldatensatz kann eine Mehrzahl von Elementen, insbesondere eine Mehrzahl von Geometrieelementen, aufweisen. Der Begriff "Geometrieelement", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Element des Solldatensatzes beziehen, welches ein zu überprüfendes Merkmal darstellt. Die Geometrieelemente können beispielsweise jeweils Regelgeometrien sein, beispielsweise Kreise oder Rechtecke. Der Solldatensatz kann alternativ oder zusätzlich mindestens eine Sondergeometrie aufweisen, beispielsweise mindestens eine Kurve, insbesondere eine Mehrzahl von Kurven. Der Solldatensatz kann Sondergeometrien, Regelgeometrien oder eine Kombination von Sondergeometrien und Regelgeometrien aufweisen.

Der Solldatensatz kann beispielsweise ein Muster aufweisen. Die Elemente des Solldatensatzes können ein Muster bilden. Beispielsweise kann das Muster ein Muster aus mehreren Rechtecken, Dreiecken, Hexagonen, oder mehreren Kreisen sein. Der Begriff "Muster", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Mehrzahl von Elementen beziehen, welche im Wesentlichen regelmäßig und/oder periodisch und/oder konstant zueinander angeordnet sind. Unter "im Wesentlichen regelmäßig und/oder periodisch und/oder konstant zueinander angeordnet" kann verstanden werden, dass vollständig regelmäßige und/oder periodische und/oder konstante Anordnungen und Anordnungen, in welchen das Muster von einer regelmäßigen und/oder periodischen und/oder konstanten Anordnungen abweichende Bereiche aufweist, denkbar sind. Beispielsweise kann das Muster fehlende Positionen aufweisen.

Der Solldatensatz kann weiterhin eine äußere Kontur, auch als Randbegrenzung bezeichnet, umfassen. Beispielsweise kann die äußere Kontur durch eine Erfassung einer Geometrie am Koordinatenmessgerät definiert sein. Die äußere Kontur kann eine rotationssymmetrische Randbegrenzung sein. Die äußere Kontur kann insbesondere eine Kugel oder, in 2D ein Kreis sein. Beispielsweise kann die äußere Kontur ein Aussenkreis sein. Auch andere äußere Konturen sind denkbar, insbesondere nicht rotationssymmetrische oder lineare Konturen.

Der Begriff "Bereitstellen des Solldatensatzes", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Laden, insbesondere ein Importieren, und/oder ein Generieren des Solldatensatzes beziehen.

Der Begriff "Startmuster", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein, beispielsweise von einer Datenverarbeitungseinheit, erzeugtes Muster beziehen, welches im Hinblick auf den Solldatensatz anzupassen ist. Das Startmuster kann eine Mehrzahl von Geometrieelementen umfassen. Die Geometrieelemente des Startmusters können beispielsweise jeweils Regelgeometrien sein, beispielsweise Kreise oder Rechtecke. Das Bereitstellen des Startmusters umfasst ein Erstellen mindestens einer Teilung, wobei das Erstellen der Teilung ein Anwenden mindestens einer Teilungsfunktion umfasst. Die Teilung weist eine Mehrzahl von Teilungsindizes auf. Verfahren zum Erstellen einer Teilung sind dem Fachmann bekannt. Die Teilung kann eine Schleife über Geometrieelemente sein und/oder umfassen. Dabei kann die Teilung, beziehungsweise Schleife beispielsweise eine eindimensionale oder mehrdimensionale Schleife sein. Diese können linear, rotationssymmetrisch oder weiteren Mustern entsprechen. Im Sprachgebrauch kann die Teilung das gleiche wie eine Schleife über ein Geometrieelement sein, wenn damit eine Ursprungsgeometrie nach einem Muster vervielfältigt wird.

Der Begriff "Teilung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Mehrzahl von, beispielsweise von der Datenverarbeitungseinheit, erzeugten Geometrieelementen beziehen, beispielsweise eine Mehrzahl von Kreiselementen. Eine Position jedes der Geometrieelemente in der Teilung kann durch die Teilungsfunktion definiert sein. Die Teilung kann eine eindimensionale, zweidimensionale oder dreidimensionale Teilung sein. Die Teilung kann eine lineare Teilung, eine Rotationsteilung oder eine Versatz Polarteilung sein. Das Erstellen einer linearen Teilung kann ein Definieren eines ersten Teilungsindex umfassen, wobei das Definieren ein Bestimmen einer Position und einer Art des Teilungsindex, beispielsweise ein Kreis, umfasst. Das Erstellen der linearen Teilung kann ein Bestimmen einer Gesamtanzahl von Teilungsindizes in x-Richtung und/oder in y-Richtung umfassen. Das Erstellen der linearen Teilung kann ein Bestimmen eines Versatzes in mindestens eine Richtung um einen konstanten Wert umfassen. Ausgehend von dem ersten Teilungsindex kann unter Verwendung der Gesamtzahl und des Versatzes mit der Teilungsfunktion die Teilung erzeugt werden. Die Teilungsfunktion für eine lineare Teilung kann eine lineare Funktion sein.

Der Begriff "Teilungsindex", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einzelnes Elemente der Teilung beziehen. Die Teilungsindizes können auch als Teilungselemente bezeichnet werden. In dem Prüfplan können Elemente entsprechend der Teilungsindizes angelegt werden. Beispielsweise können Teilungsindizes Messelemente darstellen, die in einem Messverfahren vermessen werden sollen.

Das erfindungsgemäße Verfahren schlägt vor, statt manuell die im realen Messobjekt nicht vorhandenen Elemente zu löschen, über einen Softwarealgorithmus einen Abgleich zwischen Solldatensatz und Startmuster durchzuführen, die nicht vorhandenen Elemente automatisch aus dem Startmuster zu löschen und so ein Zielmuster zu erstellen, anhand dessen die Elemente des Prüfplans angelegt werden. Der Abgleich Solldatensatz und Startmuster erfolgt dabei insbesondere nicht manuell, sondern vollautomatisch. Der Begriff "Zielmuster", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein im Hinblick auf den Solldatensatz angepasstes Muster beziehen.

Das Anpassen des mindestens einen Teilungsindex kann ein Maskieren des Teilungsindex umfassen. Der Begriff "Anpassen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Veränderung der Teilungsindizes beziehen, insbesondere ein Entfernen und/oder Löschen, auch als Maskieren bezeichnet. Maskierte Teilungsindizes werden bei der Erstellung des Prüfplans nicht berücksichtigt.

Der Solldatensatz kann ein Muster mit fehlenden Positionen aufweisen. Der Vergleich kann ein Entfernen und/oder Löschen aller Teilungsindizes umfassen, welche den fehlenden Positionen des Solldatensatzes entsprechen.

Der Vergleich zwischen Solldatensatz und Teilung kann ein Berücksichtigen der äußeren Kontur des Solldatensatzes umfassen. Der Vergleich kann ein Entfernen und/oder ein Löschen aller Teilungsindizes außerhalb oder innerhalb der äußeren Kontur umfassen. Beispielsweise kann die äußere Kontur ein Aussenkreis sein und alle Teilungsindizes außerhalb des Aussenkreises gelöscht und/oder entfernt werden. Auch ein Hinzufügen von Teilungsindizes ist denkbar.

Der Vergleich zwischen Solldatensatz und Teilung kann insbesondere einen Mustervergleich zwischen Solldatensatz und Teilung umfassen. Der Mustervergleich kann ein Identifizieren und/oder Selektieren einer Musterposition des Solldatensatzes umfassen. Der Mustervergleich kann ein Identifizieren einer der identifizierten und/oder selektierten Musterposition des Solldatensatz entsprechenden Musterposition der Teilung umfassen. Der Mustervergleich kann ein Bestimmen einer Existenz oder eines Fehlens eines Elements des Solldatensatzes an der identifizierten und/oder selektierten Musterposition des Solldatensatz umfassen. Der Musterabgleich kann ein Bestimmen einer Existenz oder eines Fehlens eines Teilungsindizes an der, der identifizierten und/oder selektierten Musterposition des Solldatensatz entsprechenden, Musterposition umfassen. Der Mustervergleich kann bei Nichtübereinstimmen von Existenz oder Fehlens an den Musterpositionen des Solldatensatzes und der entsprechenden Musterposition der Teilung die Teilung anpassen, insbesondere durch Maskieren der Teilungsindizes.

Der Begriff "Musterinformation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Information beziehen, welche das Muster, insbesondere das Zielmuster, beschreibt. Die Musterinformation kann eine Information über eine Verteilung der Elemente des Musters, Position der Elemente im Muster, Art der Elemente, Typ des Musters umfassen. Der Type des Musters kann zum Beispiel eine Teilung mit polarem Versatz, und/oder eine ld-Linearteilung oder eine 2d-Linearteilung oder Rotationsteilung oder Teilung mit Positionsliste sein.

Der Begriff "Anlegen" eines Elements im Prüfplan, wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Hinzufügen und/oder ein Berücksichtigen eines Elements im Prüfplan beziehen. Angepasste Teilungsindizes werden nicht im Prüfplan angelegt.

In einem weiteren Aspekt wird ein Messverfahren zur Vermessung des mindestens einen Messobjekts vorgeschlagen. Das Messverfahren umfasst ein Erstellen eines Prüfplans nach dem erfindungsgemäßen Verfahren zum Erstellen eines Prüfplans in einer seiner beschriebenen Ausgestaltungen. Hinsichtlich Definitionen und Ausgestaltungen des Messverfahrens wird auf Definitionen und Ausgestaltungen hinsichtlich des Verfahren zum Erstellen eines Prüfplans verwiesen. Das Messverfahren weist mindestens einen Messschritt auf. In dem Messschritt wird eine Vermessung des Messobjekts gemäß dem Prüfplan durchgeführt. In dem Messverfahren kann insbesondere ein Koordinatenmessgerät verwendet werden. Das Koordinatenmessgerät kann ein Koordinatenmessgerät sein ausgewählt aus der Gruppe bestehend aus: einem taktilen Koordinatenmessgerät, einem optischen Koordinatenmessgerät, einem Koordinatenmessgerät basierend auf einem Laser. Alternativ kann das Messverfahren auf Computertomograph-Systemen verwendet werden.

Ferner wird im Rahmen der vorliegenden Erfindung ein Computerprogramm vorgeschlagen, das bei Ablauf auf einem Computer oder Computer-Netzwerk mindestens eines der erfindungsgemäßen Verfahren in einer seiner Ausgestaltungen ausführt, insbesondere die Verfahrensschritte a) bis d).

Weiterhin wird im Rahmen der vorliegenden Erfindung ein Computerprogramm mit Programmcode-Mitteln vorgeschlagen, um die erfindungsgemäßen Verfahren in einer ihrer Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Die Begriffe "computerlesbarer Datenträger", "Datenspeicher" und "computerlesbares Speichermedium", wie sie hier verwendet werden, können sich insbesondere auf nichttransitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits-und/oder Hauptspeicher eines Computers oder Computer-Netzwerkes die erfindungsgemäßen Verfahren in einer ihrer Ausgestaltungen ausführen kann.

Auch wird im Rahmen der vorliegenden Erfindung ein Computerprogramm-Produkt mit auf einem maschinenlesbaren Träger gespeicherten Programmcode-Mitteln vorgeschlagen, um die erfindungsgemäßen Verfahren in einer ihrer Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Daten-übertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Auswählen von Datensätzen durch den Benutzer.

In einem weiteren Aspekt wird im Rahmen der vorliegenden Erfindung ein Koordinatenmessgerät zur Vermessung mindestens eines Messobjekts mit einem beliebigen Sensor oder einem Computertomograph vorgeschlagen.

Der Begriff "Koordinatenmessgerät" wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf eine Vorrichtung zur Bestimmung mindestens einer Koordinate des Messobjekts beziehen. Das Koordinatenmessgerät kann ein Portalmessgerät oder ein Brückenmessgerät sein. Das Koordinatenmessgerät kann einen Messtisch zur Auflage mindestens eines zu vermessenden Werkstücks aufweisen. Das Koordinatenmessgerät kann mindestens ein Portal aufweisen, welches mindestens eine erste vertikale Säule, mindestens eine zweite vertikale Säule und eine die erste vertikale Säule und die zweite vertikale Säule verbindende Traverse aufweist. Mindestens eine vertikale Säule ausgewählt aus der ersten und zweiten vertikalen Säule kann auf dem Messtisch beweglich gelagert sein. Die horizontale Richtung kann eine Richtung entlang einer y-Achse sein. Das Koordinatenmessgerät kann ein Koordinatensystem, beispielsweise ein kartesisches Koordinatensystem oder ein Kugelkoordinatensystem, aufweisen. Auch andere Koordinatensysteme sind denkbar. Eine x-Achse kann senkrecht zur y-Achse, in einer Ebene der Auflagefläche des Messtischs verlaufen. Senkrecht zu der Ebene der Auflagefläche, in eine vertikale Richtung, kann sich eine z-Achse, auch longitudinale Achse genannt, erstrecken. Die vertikalen Säulen können sich entlang der z-Achse erstrecken. Die Traverse kann sich entlang der x-Achse erstrecken. Beispielsweise kann das Koordinatenmessgerät ein taktiles Koordinatenmessgerät sein. Der Begriff "taktil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Tasteigenschaft beziehen. Taktile Koordinatenmessgeräte können Messobjekte zu Vermessungszwecken abtasten. Das taktile Koordinatenmessgerät kann insbesondere ermitteln, ob die vorgegebenen Toleranzen bei einem Messobjekt eingehalten werden.

Das Koordinatenmessgerät umfasst mindestens eine Datenverarbeitungseinheit. Der Begriff "Datenverarbeitungseinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Logikschaltung, zum Ausführen grundlegender Operationen eines Computers oder Systems, beziehen und/oder allgemein auf eine Vorrichtung, welche zum Ausführen von Berechnungen oder logischen Operationen eingerichtet ist. Die Datenverarbeitungseinheit kann einen Prozessor oder eine Prozessoreinheit aufweisen. Die Datenverarbeitungseinheit kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher aufweisen. Die Datenverarbeitungseinheit kann einen Multi-Core-Prozessor aufweisen. Die Datenverarbeitungseinheit kann eine Zentrale Verarbeitungseinheit (CPU) aufweisen. Alternativ oder zusätzlich kann die Datenverarbeitungseinheit eine oder mehrere Anwendungsspezifische integrierte Schaltungen und/oder eine oder mehrere Field Programmable Gate Arrays (FPGAs) oder ähnliches aufweisen.

Die Datenverarbeitungseinheit ist eingerichtet, um mindestens einen Prüfplan zur Vermessung des Messobjekts zu erstellen.

Die Datenverarbeitungseinheit umfasst mindestens eine Schnittstelle, welche eingerichtet ist, um mindestens einen Solldatensatz des Messobjekts und mindestens ein Startmuster bereitzustellen. Das Bereitstellen umfasst ein Erstellen einer Teilung. Das Erstellen der Teilung umfasst ein Anwenden mindestens einer Teilungsfunktion. Die Teilung weist eine Mehrzahl von Teilungsindizes auf.

Der Begriff "Schnittstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Element oder Teil der Der Datenverarbeitungseinheit beziehen, welches eingerichtet ist, Informationen zu übertragen. Die Schnittstelle kann eine Kommunikationsschnittstelle, insbesondere eine Datenschnittstelle sein, welche eingerichtet ist, Daten von einer anderen Vorrichtung und/oder von einem Benutzer zu empfangen und/oder Daten von der Schnittstelle an weitere Komponenten der Datenverarbeitungseinheit und/oder an externe Vorrichtungen zu übermitteln. Die Schnittstelle kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle kann mindestens eine Datenverbindung aufweisen, beispielweise eine Bluetooth-Verbindung, eine NFC-Verbindung oder eine andere Verbindung. Die Schnittstelle kann mindestens ein Netzwerk aufweisen oder Teil eines Netzwerkes sein. Die Schnittstelle kann mindestens einen Internet-Port, mindestens einen USB-Port, mindestens ein Laufwerk oder ein Webinterface aufweisen.

Die Datenverarbeitungseinheit ist eingerichtet, um ein Zielmuster zu erstellen. Die Datenverarbeitungseinheit ist eingerichtet, um den Solldatensatz und die Teilung zu vergleichen. Die Datenverarbeitungseinheit ist eingerichtet, um bei einer Abweichung der Teilung von dem Solldatensatz mindestens einen Teilungsindex anzupassen. Die Datenverarbeitungseinheit ist eingerichtet, um mindestens ein Element mit mindestens einer Musterinformation im Prüfplan entsprechend des Zielmusters anzulegen.

Das Koordinatenmessgerät kann mindestens eine Steuerung aufweisen, welche eingerichtet ist, mindestens eine Komponente des Koordinatenmessgeräts zur Vermessung des Messobjekts gemäß dem Prüfplan anzusteuern.

Das Koordinatenmessgerät kann eingerichtet sein ein erfindungsgemäßes Verfahren zum Erstellen eines Prüfplans in einer seiner Ausgestaltungen und/oder ein erfindungsgemäßes Messverfahren in einer seiner Ausgestaltungen auszuführen. Hinsichtlich Definitionen und Ausgestaltungen des Messverfahrens wird auf Definitionen und Ausgestaltungen hinsichtlich des Verfahren zum Erstellen eines Prüfplans verwiesen.

Die vorgeschlagenen Vorrichtungen und Verfahren weisen zahlreiche Vorteile gegenüber bekannten Vorrichtungen und Verfahren auf. So können infolge einer verbesserten Automatisierung bei der Erstellung von Prüfplänen Zeitaufwand und Arbeitskraft reduziert werden. Ferner kann ebenso die Fehleranfälligkeit gegenüber einer manuellen Bearbeitung verringert werden.

Zusammenfassend werden, ohne Beschränkung weiterer möglicher Ausgestaltungen, folgende Ausführungsformen vorgeschlagen:
Ausführungsform 1: Computerimplementiertes Verfahren zum automatischen Erstellen mindestens eines Prüfplans zur Vermessung mindestens eines Messobjekts, wobei das Verfahren folgende Schritte umfasst
   a) Bereitstellen eines Solldatensatzes des Messobjekts;
   b) Bereitstellen eines Startmusters, wobei das Bereitstellen ein Erstellen einer Teilung umfasst, wobei das Erstellen der Teilung ein Anwenden mindestens einer Teilungsfunktion umfasst, wobei die Teilung eine Mehrzahl von Teilungsindizes aufweist;
   c) Erstellen eines Zielmusters, wobei das Erstellen des Zielmusters einen Vergleich zwischen Solldatensatz und der Teilung umfasst, wobei bei einer Abweichung der Teilung von dem Solldatensatz mindestens ein Teilungsindex angepasst wird;
   d) Anlegen mindestens eines Elements mit mindestens einer Musterinformation im Prüfplan entsprechend des Zielmusters.
Ausführungsform 2: Verfahren nach der vorhergehenden Ausführungsform, wobei der Solldatensatz aus mindestens einem Model des Messobjekts erzeugt wird und/oder mindestens ein Modell des Messobjekts umfasst, wobei das Modell des Messobjekts ein CAD-Modell ist und/oder umfasst.
Ausführungsform 3: Verfahren nach einer der vorhergehenden Ausführungsformen, wobei der Solldatensatz eine Mehrzahl von Elementen aufweist, wobei der Solldatensatz Sondergeometrien, Regelgeometrien oder eine Kombination von Sondergeometrien und Regelgeometrien aufweist.
Ausführungsform 4: Verfahren nach einer der vorhergehenden Ausführungsformen, wobei das Anpassen des mindestens einen Teilungsindex ein Maskieren des Teilungsindex umfasst.
Ausführungsform 5: Verfahren nach einer der vorhergehenden Ausführungsformen, wobei der Solldatensatz ein Muster mit fehlenden Positionen aufweist, wobei der Vergleich ein Entfernen und/oder Löschen aller Teilungsindizes umfasst, welche den fehlenden Positionen des Solldatensatzes entsprechen.
Ausführungsform 6: Verfahren nach einer der vorhergehenden Ausführungsformen, wobei der Solldatensatz eine äußere Kontur umfasst.
Ausführungsform 7: Verfahren nach der vorhergehenden Ausführungsform, wobei der Vergleich zwischen Solldatensatz und Teilung ein Berücksichtigen der äußeren Kontur umfasst, wobei der Vergleich ein Entfernen und/oder Löschen aller Teilungsindizes außerhalb oder innerhalb der äußeren Kontur umfasst.
Ausführungsform 8: Verfahren nach einer der vorhergehenden Ausführungsformen, wobei der Vergleich einen Mustervergleich zwischen Solldatensatz und Teilung umfasst.
Ausführungsform 9: Verfahren nach der vorhergehenden Ausführungsform, wobei angepasste Teilungsindizes nicht im Prüfplan angelegt werden.
Ausführungsform 10: Messverfahren zur Vermessung mindestens eines Messobjekts, wobei das Messverfahren ein Erstellen eines Prüfplans nach einer der vorhergehenden, ein Verfahren zum Erstellen eines Prüfplans betreffenden, Ausführungsformen umfasst, wobei das Messverfahren mindestens einen Messschritt aufweist, wobei in dem Messschritt eine Vermessung des Messobjekts gemäß dem Prüfplan durchgeführt.
Ausführungsform 11: Computerprogramm, welches bei Ablauf auf einem Computer oder Computernetzwerk ein Verfahren zum Erstellen eines Prüfplans nach einer der vorhergehenden, ein Verfahren zum Erstellen eines Prüfplans betreffenden, Ausführungsformen, insbesondere die Verfahrensschritte a) bis d), und/oder ein Messverfahren nach dem vorhergehenden Ausführungsform, in einer seiner Ausgestaltungen ausführt.
Ausführungsform 12: Computerprogramm-Produkt mit auf einem maschinenlesbaren Träger gespeicherten Programmcode-Mitteln, um ein Verfahren zum Erstellen eines Prüfplans nach einer der vorhergehenden, ein Verfahren zum Erstellen eines Prüfplans betreffenden, Ausführungsformen und/oder ein Messverfahren nach der vorvorhergehenden Ausführungsform, durchzuführen, wenn das Programm auf einem Computer oder Computer-Netzwerk ausgeführt wird.
Ausführungsform 13: Koordinatenmessgerät zur Vermessung mindestens eines Messobjekts, wobei das Koordinatenmessgerät mindestens eine Datenverarbeitungseinheit umfasst, wobei die Datenverarbeitungseinheit eingerichtet ist, um mindestens einen Prüfplan zur Vermessung des Messobjekts zu erstellen, wobei die Datenverarbeitungseinheit mindestens eine Schnittstelle umfasst, welche eingerichtet ist, um mindestens einen Solldatensatz des Messobjekts und mindestens ein Startmuster bereitzustellen, wobei das Bereitstellen ein Erstellen einer Teilung umfasst, wobei das Erstellen der Teilung ein Anwenden mindestens einer Teilungsfunktion umfasst, wobei die Teilung eine Mehrzahl von Teilungsindizes aufweist, wobei die Datenverarbeitungseinheit eingerichtet ist, um ein Zielmuster zu erstellen, wobei die Datenverarbeitungseinheit eingerichtet ist, um den Solldatensatz und die Teilung zu vergleichen, wobei die Datenverarbeitungseinheit eingerichtet ist, um bei einer Abweichung der Teilung von dem Solldatensatz mindestens einen Teilungsindex anzupassen, wobei die Datenverarbeitungseinheit eingerichtet ist, um mindestens ein Element mit mindestens einer Musterinformation im Prüfplan entsprechend des Zielmusters anzulegen.
Ausführungsform 14: Koordinatenmessgerät nach der vorhergehenden Ausführungsform, wobei das Koordinatenmessgerät mindestens eine Steuerung aufweist, welche eingerichtet ist, mindestens eine Komponente des Koordinatenmessgeräts zur Vermessung des Messobjekts gemäß dem Prüfplan anzusteuern.
Ausführungsform 15: Koordinatenmessgerät nach einer der vorhergehenden ein Koordinatenmessgerät betreffenden Ausführungsformen, wobei das Koordinatenmessgerät eingerichtet ist, ein Verfahren zum Erstellen eines Prüfplans nach einem der vorhergehenden, ein Verfahren zum Erstellen eines Prüfplans betreffenden, Ansprüche und/oder ein Messverfahren nach Ausführungsform 10 auszuführen.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

### Im Einzelnen zeigen:

- Figur 1: ein Ausführungsbeispiel des Erfindungsgemäßen Verfahrens;
- Figuren 2A und 2B: zwei Ausführungsbeispiele von Solldatensätzen;
- Figur 3: ein Ausführungsbeispiel einer Teilung;
- Figuren 4A und 4B: zwei Ausführungsbeispiele für Anpassungen eines Startmusters;
- Figur 5: eine schematische Darstellung eines Ausführungsbeispiels eines erfindungsgemäßen Koordinatenmessgeräts; und
- Figuren 6A bis 6E: weitere Ausführungsbeispiele von Teilungen.

### Beschreibung der Ausführungsbeispiele

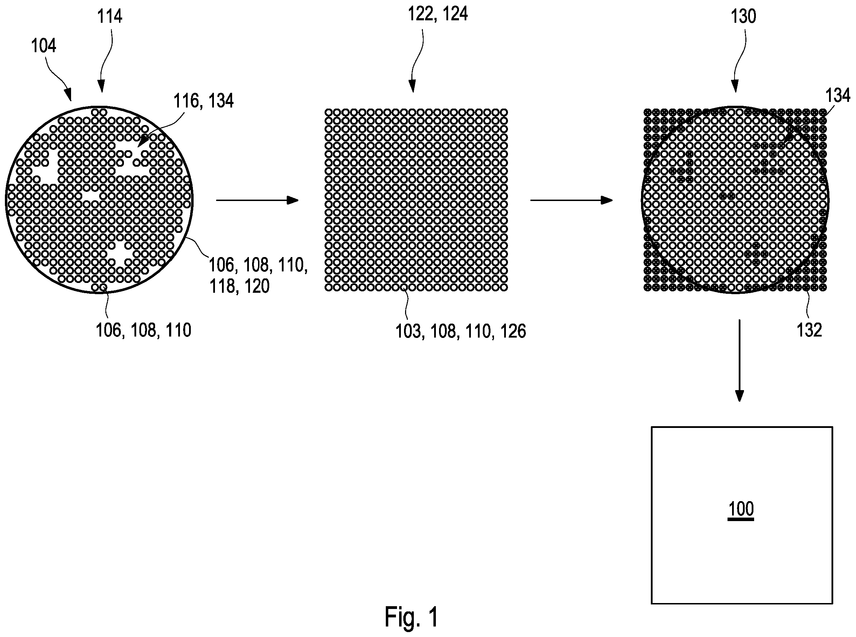

Figur 1 zeigt ein Flussdiagram eines Ausführungsbeispiels eines erfindungsgemäßen computerimplementierten Verfahrens zum automatischen Erstellen mindestens eines Prüfplans 100 zur Vermessung mindestens eines Messobjekts 102, welches in den Figuren nicht dargestellt ist. Das Verfahren kann mindestens einen Computer und/oder mindestens ein Computer-Netzwerk involvieren. Der Computer und/oder das Computer-Netzwerk können mindestens einen Prozessor umfassen, wobei der Prozessor dazu eingerichtet ist, mindestens einen Verfahrensschritt des Verfahrens der Erfindung durchzuführen. Bevorzugt wird jeder der Verfahrensschritte jeweils von dem Computer und/oder dem Computer-Netzwerk durchgeführt. Das Verfahren kann vollständig automatisch und im Speziellen ohne Benutzerinteraktion durchgeführt werden.

Der Prüfplan 100 kann eine Spezifizierung mindestens einer Prüfung sein, insbesondere ein Ergebnis einer Prüfplanung. Die Prüfung kann beispielsweise eine Qualitätsprüfung sein. Der Prüfplan 100 kann eine Mehrzahl von Elementen aufweisen, wie beispielsweise Prüfspezifikationen, Prüfanweisungen und Prüfablaufpläne. Die Prüfspezifikationen können Prüfmerkmale festlegen. Das Prüfmerkmal kann ein zu bestimmendes und/oder zu überprüfendes und/oder zu testendes Merkmal mindestens eines Messelements 103 sein. Ein Bestimmen und/oder Prüfen eines Prüfmerkmals kann ein Bestimmen und/oder Prüfen von Maßabweichungen und/oder Formabweichungen und/oder Lageabweichungen umfassen. Das Prüfmerkmal kann ein Merkmal sein ausgewählt aus der Gruppe bestehend aus: mindestens eine Länge; mindestens ein Winkelmaß, mindestens ein Oberflächenparameter, eine Form, eine Lage. Das Messelement 103 kann ein vorbestimmtes oder vorbestimmbares geometrisches Element sein. Das Messelement 103 kann beispielsweise ein Geometrieelement sein, ausgewählt aus der Gruppe bestehend aus einem Kreis, einem Zylinder, einem Rechteck, einer Gerade, oder einem anderen Element mit einer Regelgeometrie. Das Prüfmerkmal kann beispielsweise durch Messung von Punkten und/oder Linien und/oder Flächen des Messobjekts 102 bestimmt und/oder überprüft werden. Die Prüfanweisungen des Prüfplans können Anweisungen für die Durchführung der Prüfung umfassen. Die Prüfablaufpläne können eine Abfolge der Prüfungen festlegen. Weiter kann der Prüfplan 100 Information umfassen, welche eine Dokumentation der Prüfung bestimmen.

Das Messobjekt 102 kann ein beliebig geformtes zu vermessendes Objekt sein. Beispielsweise kann das Messobjekt 102 ausgewählt sein aus der Gruppe bestehend aus einem Prüfling, einem Werkstück und einem zu vermessenden Bauteil. Die Vermessung eines Messobjekts 102 kann eine Erfassung geometrischer Abmessungen des Messobjekts 102 durch Positionsmessungen und/oder Distanzmessungen und/oder Winkelmessungen umfassen.

Das Verfahren umfasst ein Bereitstellen eines Solldatensatzes 104 des Messobjekts 102. Das Bereitstellen des Solldatensatzes 104 kann ein Laden, insbesondere ein Importieren, und/oder ein Generieren des Solldatensatzes 104 umfassen. Der Solldatensatz 104 kann ein Datensatz sein und/oder umfassen, welcher Merkmale des realen Messobjekts 102 möglichst genau repräsentiert. Der Solldatensatz 104 kann aus mindestens einem Model des Messobjekts 102 erzeugt werden und/oder kann mindestens ein Modell des Messobjekts 102 umfassen. Das Modell des Messobjekts 102 kann beispielsweise ein CAD-Modell sein und/oder umfassen. Das CAD-Modell kann dreidimensional oder zweidimensional sein. Das CAD-Modell kann zu Produkt- und Fertigungsinformationen des Messobjekts 102 umfassen. Bei der Erstellung des Solldatensatz 104 können, alternativ oder zusätzlich, Messdaten, beispielsweise aus einer Prüfung und/oder einer Erfassung mindestens eines Merkmals des Messobjekts 102 mit einem Koordinatenmessgerät 136, und/oder Zusatzinformation zur Ausgestaltung des Messobjekts 102 berücksichtigt werden.

Der Solldatensatz 104 kann eine Mehrzahl von Elementen 106, insbesondere eine Mehrzahl von Geometrieelementen 108, aufweisen. Geometrieelemente 108 können zu überprüfende Merkmale umfassen. Die Geometrieelemente 108 können beispielsweise jeweils Regelgeometrien 110 sein, beispielsweise Kreise oder Rechtecke. Der Solldatensatz 104 kann alternativ oder zusätzlich mindestens eine Sondergeometrie 112 aufweisen, beispielsweise mindestens eine Kurve, insbesondere eine Mehrzahl von Kurven. Der Solldatensatz 104 kann Sondergeometrien 112, Regelgeometrien 110 oder eine Kombination von Sondergeometrien 112 und Regelgeometrien 110 aufweisen.

Der Solldatensatz 104 kann beispielsweise ein Muster 114 aufweisen. Die Elemente 106 des Solldatensatzes 104 können ein Muster 114 bilden. Beispielsweise kann das Muster 114 ein Muster 114 aus mehreren Rechtecken, Dreiecken, Hexagonen, oder mehreren Kreisen sein. Das Muster 114 kann eine Mehrzahl von Elementen 106 aufweisen, welche im Wesentlichen regelmäßig und/oder periodisch und/oder konstant zueinander angeordnet sind. Vollständig regelmäßige und/oder periodische und/oder konstante Anordnungen und Anordnungen, in welchen das Muster 114 von einer regelmäßigen und/oder periodischen und/oder konstanten Anordnung abweichende Bereiche aufweist, sind denkbar. Beispielsweise kann das Muster 114 fehlende Positionen 116 aufweisen.

Der Solldatensatz 104 kann weiterhin eine äußere Kontur 118, auch als Randbegrenzung bezeichnet, umfassen. Beispielsweise kann die äußere Kontur 118 durch eine Erfassung einer Geometrie am Koordinatenmessgerät 136 definiert sein. Die äußere Kontur 118 kann eine rotationssymmetrische Randbegrenzung sein. Die äußere Kontur 118 kann insbesondere eine Kugel oder, in 2D ein Kreis sein. Beispielsweise kann die äußere Kontur 118 ein Aussenkreis 120 sein. Auch andere äußere Konturen 118 sind denkbar, insbesondere nicht rotationssymmetrische oder lineare Konturen.

Das Verfahren umfasst ein Bereitstellen eines Startmusters 122. Das Bereitstellen umfasst ein Erstellen einer Teilung 124. Das Erstellen der Teilung 124 umfasst ein Anwenden mindestens einer Teilungsfunktion. Die Teilung 124 weist eine Mehrzahl von Teilungsindizes 126 auf. Das Startmuster 122 kann ein, beispielsweise von einer Datenverarbeitungseinheit 150, erzeugtes Muster 114 sein, welches im Hinblick auf den Solldatensatz 104 anzupassen ist. Das Startmuster 122 kann eine Mehrzahl von Geometrieelementen 108 umfassen. Die Geometrieelemente 108 des Startmusters 122 können beispielsweise jeweils Regelgeometrien sein, beispielsweise Kreise oder Rechtecke. Das Bereitstellen des Startmusters 122 umfasst ein Erstellen der mindestens einen Teilung 124. Die Teilung 124 weist eine Mehrzahl von Teilungsindizes 126 auf. Verfahren zum Erstellen einer Teilung 124 sind dem Fachmann bekannt, beispielsweise aus der Bedienungsanleitung einer Software, beispielsweise CALYPSO^{®} von ZEISS oder aus entsprechenden Schulungsunterlagen. Die Teilung 124 kann eine Mehrzahl von, beispielsweise von der Datenverarbeitungseinheit 150, erzeugten Geometrieelementen 108 aufweisen, beispielsweise eine Mehrzahl von Kreiselementen. Eine Position jedes der Geometrieelemente 108 in der Teilung 124 kann durch die Teilungsfunktion definiert sein. Die Teilungsindizes 124 können Elemente 106 der Teilung 124 sein. In dem Prüfplan 100 können Elemente 106 entsprechend der Teilungsindizes 126 angelegt werden. Beispielsweise können Teilungsindizes 126 Messelemente 103 darstellen, die in einem Messverfahren vermessen werden sollen.

Das Verfahren umfasst ein Erstellen eines Zielmusters 130. Das Erstellen des Zielmusters 130 umfasst einen Vergleich zwischen Solldatensatz 104 und der Teilung 124. Bei einer Abweichung der Teilung 124 von dem Solldatensatz 104 wird mindestens ein Teilungsindex 126 angepasst. Das erfindungsgemäße Verfahren schlägt vor, statt manuell die im realen Messobjekt 102 nicht vorhandenen Elemente 106 zu löschen, über einen Softwarealgorithmus einen Abgleich zwischen Solldatensatz 104 und Startmuster 122 durchzuführen, die nicht vorhandenen Elemente 106 automatisch aus dem Startmuster 122 zu löschen und so ein Zielmuster 130 zu erstellen, anhand dessen die Elemente 106 des Prüfplans 100 angelegt werden. Der Abgleich Solldatensatz 104 und Startmuster 122 erfolgt dabei insbesondere nicht manuell, sondern vollautomatisch. Das Zielmuster 130 kann ein im Hinblick auf den Solldatensatz 104 angepasstes Muster 114 sein.

Das Anpassen kann eine Veränderung der Teilungsindizes 126 umfassen. Insbesondere kann das Anpassen ein Entfernen und/oder Löschen, auch als Maskieren bezeichnet, umfassen. Maskierte Teilungsindizes 132 werden bei der Erstellung des Prüfplans 100 nicht berücksichtigt.

Der Solldatensatz 104 kann ein Muster 114 mit fehlenden Positionen 116 aufweisen. Der Vergleich kann ein Entfernen und/oder Löschen aller Teilungsindizes 126 umfassen, welche den fehlenden Positionen 116 des Solldatensatzes 104 entsprechen.

Der Vergleich zwischen Solldatensatz 104 und Teilung 124 kann ein Berücksichtigen der äußeren Kontur 118 des Solldatensatzes 104 umfassen. Der Vergleich kann ein Entfernen und/oder Löschen aller Teilungsindizes 126 außerhalb oder innerhalb der äußeren Kontur 118 umfassen. Beispielsweise kann die äußere Kontur 118 ein Aussenkreis 120 sein und alle Teilungsindizes 126 außerhalb des Aussenkreises 120 gelöscht und/oder entfernt werden. Auch ein Hinzufügen von Teilungsindizes 126 ist denkbar.

Der Vergleich zwischen Solldatensatz 104 und Teilung 124 kann insbesondere einen Mustervergleich zwischen Solldatensatz 104 und Teilung 124 umfassen. Der Mustervergleich kann ein Identifizieren und/oder Selektieren einer Musterposition des Solldatensatzes 104 umfassen, beispielsweise unter Verwendung eines Bildverarbeitungsalgorithmus. Der Mustervergleich kann ein Identifizieren einer der identifizierten und/oder selektierten Musterposition des Solldatensatz entsprechenden Musterposition der Teilung 124 umfassen. Der Mustervergleich kann ein Bestimmen einer Existenz oder eines Fehlens eines Elements 106 des Solldatensatzes 104 an der identifizierten und/oder selektierten Musterposition 134 des Solldatensatz 104 umfassen. Der Musterabgleich kann ein Bestimmen einer Existenz oder eines Fehlens eines Teilungsindizes 126 an der, der identifizierten und/oder selektierten Musterposition 134 des Solldatensatz 104 entsprechenden, Musterposition 134 umfassen. Der Mustervergleich kann bei Nichtübereinstimmen von Existenz oder Fehlens an den Musterpositionen 134 des Solldatensatzes 104 und der entsprechenden Musterposition 134 der Teilung 124 die Teilung 124 anpassen, insbesondere durch Maskieren der Teilungsindizes 126.

Das Verfahren umfasst weiter ein Anlegen mindestens eines Elements mit mindestens einer Musterinformation im Prüfplan 100 entsprechend des Zielmusters 130. Die Musterinformation kann eine Information aufweisen, welche das Zielmuster 130 beschreibt. Die Musterinformation kann eine Information über eine Verteilung der Elemente 106 des Zielmusters 130, Position der Elemente 106 im Zielmuster 130, Art der Elemente 106 des Zielmusters 130, Typ des Musters umfassen. Der Typ des Musters kann zum Beispiel eine Teilung mit polarem Versatz, oder eine ld-Linearteilung oder eine 2d-Linearteilung oder Rotationsteilung oder Teilung mit Positionsliste sein. Das Anlegen eines Elements im Prüfplan kann ein Hinzufügen und/oder ein Berücksichtigen eines Elements im Prüfplan 100 umfassen. Angepasste Teilungsindizes 126 werden nicht im Prüfplan 100 angelegt.

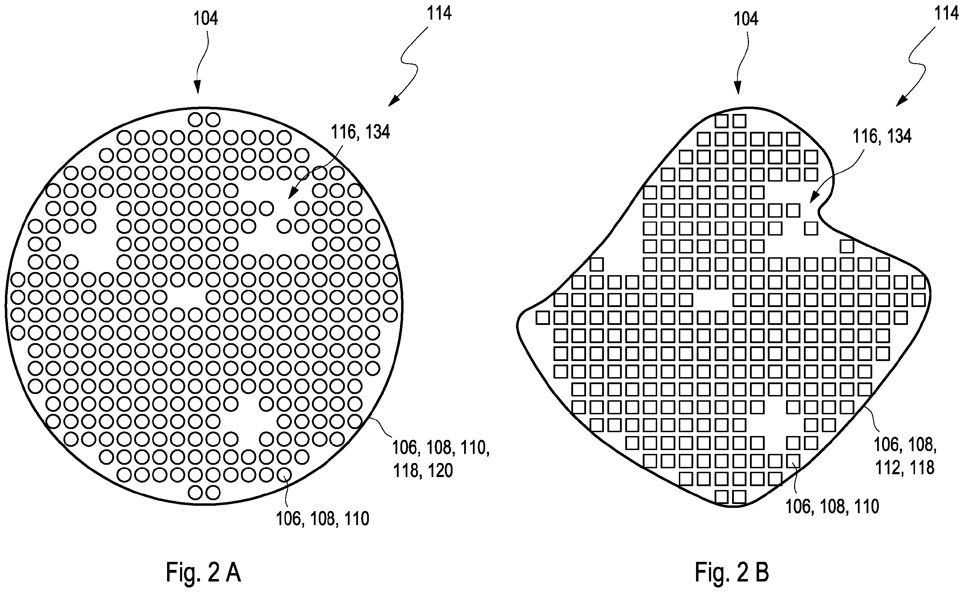

Die Figuren 2A und 2B zeigen Ausführungsbeispiele von Solldatensätzen 104. In dem Ausführungsbeispiel der Figur 2A umfasst der Solldatensatz 104 ein Muster 114 aus mehreren Kreisen. Der Solldatensatz 104 weist in Figur 2A eine äußere Kontur 118 in Form einer rotationssymmetrischen Randbegrenzung auf, insbesondere einen Aussenkreis 120. In dem Ausführungsbeispiel der Figur 2B umfasst der Solldatensatz 104 ein Muster 114 aus mehreren Rechtecken. Der Solldatensatz 104 weist in Figur 2B eine äußere Kontur 118 in Form einer nicht rotationssymmetrischen oder nicht linearen Kurve auf.

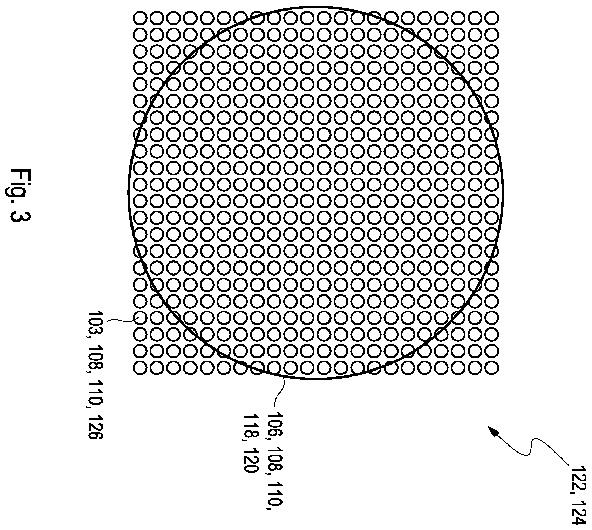

Figur 3 zeigt ein Ausführungsbeispiel einer Teilung 124. Die Teilung 124 umfasst eine Mehrzahl von kreisförmigen Teilungsindizes 126. Weiter ist eine äußere Kontur 118 in Form eines Außenkreises 120 gezeigt.

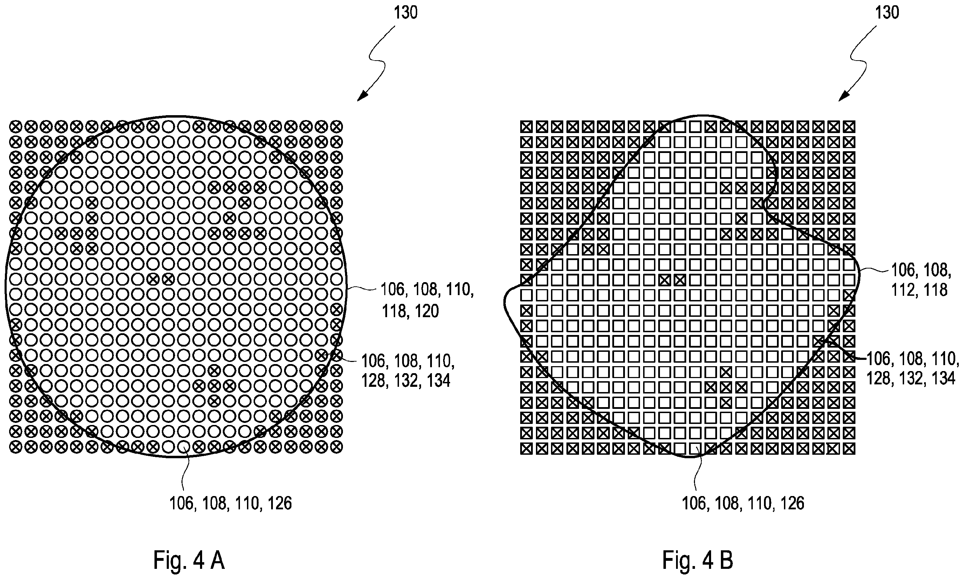

Die Figuren 4A und 4B zeigen Ausführungsbeispiele für eine Anpassung eines Startmusters 122. Figur 4A zeigt eine Anpassung des Startmusters 122 an den Solldatensatz 104 von Figur 2A. Figur 4B zeigt eine Anpassung des Startmusters 122 an den Solldatensatz 104 von Figur 2B. Die Existenz oder das Fehlen von Elementen 106 an den jeweiligen Musterpositionen von Startmuster 122 und Solldatensatz 104 wird verglichen. Dabei fehlende Positionen 116 an Musterpositionen 134 werden maskiert, was in den Figuren 4A und 4B in Form von "X" dargestellt ist.

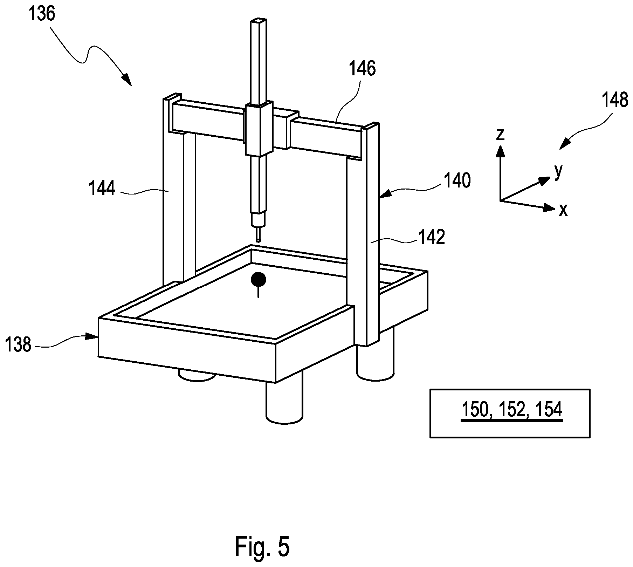

Figur 5 zeigt eine schematische Darstellung eines Ausführungsbeispiels eines erfindungsgemäßen Koordinatenmessgeräts 136 zur Vermessung mindestens eines Messobjekts 102. Das Koordinatenmessgerät 136 kann eine Vorrichtung zur Bestimmung mindestens einer Koordinate des Messobjekts 102 sein. Das Koordinatenmessgerät kann ein Portalmessgerät oder ein Brückenmessgerät sein. Das Koordinatenmessgerät 136 kann einen Messtisch 138 zur Auflage mindestens eines zu vermessenden Werkstücks aufweisen. Das Koordinatenmessgerät kann mindestens ein Portal 140 aufweisen, welches mindestens eine erste vertikale Säule 142, mindestens eine zweite vertikale Säule 144 und eine die erste vertikale Säule 142 und die zweite vertikale Säule 144 verbindende Traverse 146 aufweist. Mindestens eine vertikale Säule ausgewählt aus der ersten und zweiten vertikalen Säule 142 und 144 kann auf dem Messtisch 138 beweglich gelagert sein. Die horizontale Richtung kann eine Richtung entlang einer y-Achse sein. Das Koordinatenmessgerät 136 kann ein Koordinatensystem 148, beispielsweise ein kartesisches Koordinatensystem oder ein Kugelkoordinatensystem, aufweisen. Auch andere Koordinatensysteme sind denkbar. Eine x-Achse kann senkrecht zur y-Achse, in einer Ebene der Auflagefläche des Messtischs 138 verlaufen. Senkrecht zu der Ebene der Auflagefläche, in eine vertikale Richtung, kann sich eine z-Achse, auch longitudinale Achse genannt, erstrecken. Die vertikalen Säulen 142 und 144 können sich entlang der z-Achse erstrecken. Die Traverse 146 kann sich entlang der x-Achse erstrecken.

Das Koordinatenmessgerät 136 kann, wie in Figur 5 gezeigt, ein taktiles Koordinatenmessgerät sein. Taktile Koordinatenmessgeräte können Messobjekte 102 zu Vermessungszwecken abtasten. Das taktile Koordinatenmessgerät kann insbesondere ermitteln, ob die vorgegebenen Toleranzen bei einem Messobjekt eingehalten werden. Auch Koordinatenmessgeräte 136 mit anderen Sensoren und basierend auf anderen Sensorprinzipien oder Computertomographen sind jedoch denkbar.

Das Koordinatenmessgerät umfasst mindestens eine Datenverarbeitungseinheit 150. Die Datenverarbeitungseinheit 150 kann eine beliebige Logikschaltung, zum Ausführen grundlegender Operationen eines Computers oder Systems, aufweisen und/oder allgemein eine Vorrichtung, welche zum Ausführen von Berechnungen oder logischen Operationen eingerichtet ist. Die Datenverarbeitungseinheit kann einen Prozessor oder eine Prozessoreinheit aufweisen. Die Datenverarbeitungseinheit kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher aufweisen. Die Datenverarbeitungseinheit 150 kann einen Multi-Core-Prozessor aufweisen. Die Datenverarbeitungseinheit 150 kann eine Zentrale Verarbeitungseinheit (CPU) aufweisen. Alternativ oder zusätzlich kann die Datenverarbeitungseinheit 150 eine oder mehrere anwendungsspezifische integrierte Schaltungen und/oder eine oder mehrere Field Programmable Gate Arrays (FPGAs) oder ähnliches aufweisen.

Die Datenverarbeitungseinheit 150 ist eingerichtet, um mindestens einen Prüfplan 100 zur Vermessung des Messobjekts 102 zu erstellen.

Die Datenverarbeitungseinheit 150 umfasst mindestens eine Schnittstelle 152, welche eingerichtet ist, um mindestens einen Solldatensatz 104 des Messobjekts 102 und mindestens ein Startmuster 122 bereitzustellen. Das Bereitstellen umfasst ein Erstellen einer Teilung 124. Das Erstellen der Teilung 124 umfasst ein Anwenden mindestens einer Teilungsfunktion. Die Teilung 124 weist eine Mehrzahl von Teilungsindizes 126 auf.

Die Schnittstelle 152 kann eine Kommunikationsschnittstelle, insbesondere eine Datenschnittstelle sein, welche eingerichtet ist, Daten von einer anderen Vorrichtung und/oder von einem Benutzer zu empfangen und/oder Daten von der Schnittstelle 152 an weitere Komponenten der Datenverarbeitungseinheit und/oder an externe Vorrichtungen zu übermitteln. Die Schnittstelle 152 kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle 152 kann mindestens eine Datenverbindung aufweisen, beispielweise eine Bluetooth-Verbindung, eine NFC-Verbindung oder eine andere Verbindung. Die Schnittstelle 152 kann mindestens ein Netzwerk aufweisen oder Teil eines Netzwerkes sein. Die Schnittstelle 152 kann mindestens einen Internet-Port, mindestens einen USB-Port, mindestens ein Laufwerk oder ein Webinterface aufweisen.

Die Datenverarbeitungseinheit 150 ist eingerichtet, um ein Zielmuster 130 zu erstellen. Die Datenverarbeitungseinheit 150 ist eingerichtet, um den Solldatensatz 104 und die Teilung 124 zu vergleichen. Die Datenverarbeitungseinheit 150 ist eingerichtet, um bei einer Abweichung der Teilung 124 von dem Solldatensatz mindestens einen Teilungsindex 126 anzupassen. Die Datenverarbeitungseinheit 150 ist eingerichtet, um mindestens ein Element 106 mit mindestens einer Musterinformation im Prüfplan 100 entsprechend des Zielmusters 130 anzulegen.

Das Koordinatenmessgerät 136 kann mindestens eine Steuerung 154 aufweisen, welche eingerichtet ist, mindestens eine Komponente des Koordinatenmessgeräts 136 zur Vermessung des Messobjekts 102 gemäß dem Prüfplan 100 anzusteuern.

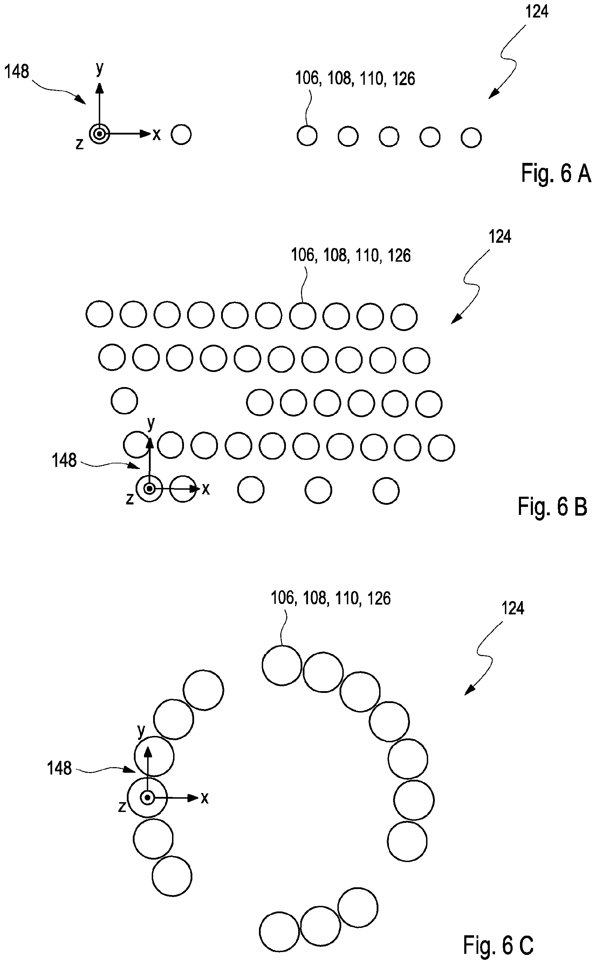

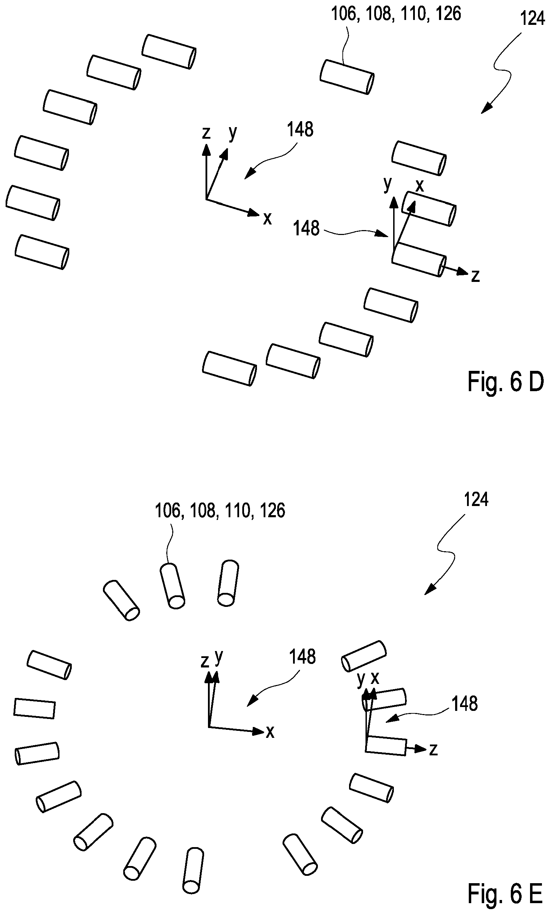

Figuren 6A bis 6E zeigen weitere Ausführungsbeispiele von angepassten Teilungen 124. Die Teilung 124 kann eine eindimensionale, zweidimensionale oder dreidimensionale Teilung 124 sein. Die Teilung 124 kann eine lineare Teilung, eine Rotationsteilung oder eine Versatz Polarteilung sein. Das Erstellen einer linearen Teilung 124 kann ein Definieren eines ersten Teilungsindex 126 umfassen, wobei das Definieren ein Bestimmen einer Position und einer Art des Teilungsindex, beispielsweise ein Kreis, umfasst. Das Erstellen der linearen Teilung 124 kann ein Bestimmen einer Gesamtanzahl von Teilungsindizes 126 in x-Richtung und/oder in y-Richtung umfassen. Das Erstellen der linearen Teilung 124 kann ein Bestimmen eines Versatzes in mindestens eine Richtung um einen konstanten Wert umfassen. Ausgehend von dem ersten Teilungsindex 126 kann unter Verwendung der Gesamtzahl und des Versatzes mit der Teilungsfunktion die Teilung 124 erzeugt werden. Die Teilungsfunktion für eine lineare Teilung kann eine lineare Funktion sein. Figur 6A zeigt ein Beispiel für eine lineare Teilung 124 in 1D in eine x-Richtung, mit an einigen Positionen fehlenden Teilungsindizes 126, welche bei der Anpassung der Teilung entfernt wurden. Figur 6B zeigt ein Beispiel für eine 2D lineare Teilung 124 in x und y Richtung, mit an einigen Positionen fehlenden Teilungsindizes 126, welche bei der Anpassung der Teilung entfernt wurden. Figur 6C zeigt ein Beispiel für eine Rotationsteilung, mit an einigen Positionen fehlenden Teilungsindizes 126. Figur 6D zeigt ein Beispiel für eine Versatz Polarteilung , mit an einigen Positionen fehlenden Teilungsindizes 126, welche bei der Anpassung der Teilung entfernt wurden. Figur 6E zeigt ein Beispiel für eine Rotationsteilung mit einem Versatz in z-Richtung, mit an einigen Positionen fehlenden Teilungsindizes 126, welche bei der Anpassung der Teilung entfernt wurden.

### Bezugszeichenliste

- 100: Prüfplan
- 102: Messobjekt
- 103: Messelement
- 104: Solldatensatz
- 106: Element
- 108: Geometrieelement
- 110: Regelgeometrie
- 112: Sondergeometrie
- 114: Muster
- 116: Fehlende Position
- 118: Randbegrenzung beziehungsweise äußere Kontur
- 120: Außenkreis
- 122: Startmuster
- 124: Teilung
- 126: Teilungsindex
- 128: Angepasstes Element
- 130: Zielmuster
- 132: Maskierter Teilungsindex
- 134: Musterposition
- 136: Koordinatenmessgerät
- 138: Messtisch
- 140: Portal
- 142: Erste vertikale Säule
- 144: Zweite vertikale Säule
- 146: Traverse
- 148: Koordinatensystem
- 150: Datenverarbeitungseinheit
- 152: Schnittstelle
- 154: Steuerung

## Patentansprüche

1. Computerimplementiertes Verfahren zum automatischen Erstellen mindestens eines Prüfplans (100) zur Vermessung mindestens eines Messobjekts (102), wobei das Verfahren folgende Schritte umfasst
a) Bereitstellen eines Solldatensatzes (104) des Messobjekts (102);
b) Bereitstellen eines Startmusters (122), wobei das Bereitstellen ein Erstellen einer Teilung (124) umfasst, wobei das Erstellen der Teilung (124) ein Anwenden mindestens einer Teilungsfunktion umfasst, wobei die Teilung (124) eine Mehrzahl von Teilungsindizes (126) aufweist;
c) Erstellen eines Zielmusters (130), wobei das Erstellen des Zielmusters (130) einen Vergleich zwischen Solldatensatz (104) und der Teilung (124) umfasst, wobei bei einer Abweichung der Teilung (124) von dem Solldatensatz (104) mindestens ein Teilungsindex (126) angepasst wird;
d) Anlegen mindestens eines Elements mit mindestens einer Musterinformation im Prüfplan (100) entsprechend des Zielmusters (130).

2. Verfahren nach dem vorhergehenden Anspruch, wobei der Solldatensatz (104) aus mindestens einem Modell des Messobjekts (102) erzeugt wird und/oder mindestens ein Modell des Messobjekts (102) umfasst, wobei das Modell des Messobjekts (102) ein CAD-Modell ist und/oder umfasst.

3. Verfahren nach einem der vorhergehenden Ansprüche, wobei der Solldatensatz (104) eine Mehrzahl von Elementen (106) aufweist, wobei der Solldatensatz (104) Sondergeometrien (112), Regelgeometrien (110) oder eine Kombination von Sondergeometrien (112) und Regelgeometrien (110) aufweist.

4. Verfahren nach einem der vorhergehenden Ansprüche, wobei das Anpassen des mindestens einen Teilungsindex (126) ein Maskieren des Teilungsindex (126) umfasst.

5. Verfahren nach einem der vorhergehenden Ansprüche, wobei der Solldatensatz (104) ein Muster (114) mit fehlenden Positionen (116) aufweist, wobei der Vergleich ein Entfernen und/oder Löschen aller Teilungsindizes (124) umfasst, welche den fehlenden Positionen (116) des Solldatensatzes (104) entsprechen.

6. Verfahren nach einem der vorhergehenden Ansprüche, wobei der Solldatensatz (104) eine äußere Kontur (118) umfasst.

7. Verfahren nach dem vorhergehenden Anspruch, wobei der Vergleich zwischen Solldatensatz (104) und Teilung (124) ein Berücksichtigen der äußeren Kontur (118) umfasst, wobei der Vergleich ein Entfernen und/oder Löschen aller Teilungsindizes (126) außerhalb der äußeren Kontur (118) umfasst.

8. Verfahren nach einem der vorhergehenden Ansprüche, wobei der Vergleich einen Mustervergleich zwischen Solldatensatz (104) und Teilung (124) umfasst.

9. Verfahren nach dem vorhergehenden Anspruch, wobei angepasste Teilungsindizes (126) nicht im Prüfplan (100) angelegt werden.

10. Messverfahren zur Vermessung mindestens eines Messobjekts (102), wobei das Messverfahren ein Erstellen eines Prüfplans (100) nach einem der vorhergehenden, ein Verfahren zum Erstellen eines Prüfplans (100) betreffenden, Ansprüche umfasst, wobei das Messverfahren mindestens einen Messschritt aufweist, wobei in dem Messschritt eine Vermessung des Messobjekts (102) gemäß dem Prüfplan (100) durchgeführt wird.

11. Computerprogramm, welches bei Ablauf auf einem Computer oder Computernetzwerk ein Verfahren zum Erstellen eines Prüfplans nach einem der vorhergehenden, ein Verfahren zum Erstellen eines Prüfplans (100) betreffenden, Ansprüche, insbesondere die Verfahrensschritte a) bis d), und/oder ein Messverfahren nach dem vorhergehenden Anspruch, in einer seiner Ausgestaltungen ausführt.

12. Computerprogramm-Produkt mit auf einem maschinenlesbaren Träger gespeicherten Programmcode-Mitteln, um ein Verfahren zum Erstellen eines Prüfplans (100) nach einem der vorhergehenden, ein Verfahren zum Erstellen eines Prüfplans betreffenden, Ansprüche und/oder ein Messverfahren nach dem vorvorhergehenden Anspruch, durchzuführen, wenn das Programm auf einem Computer oder Computer-Netzwerk ausgeführt wird.

13. Koordinatenmessgerät (136) zur Vermessung mindestens eines Messobjekts (102), wobei das Koordinatenmessgerät (136) mindestens eine Datenverarbeitungseinheit (150) umfasst, wobei die Datenverarbeitungseinheit (150) eingerichtet ist, um mindestens einen Prüfplan (100) zur Vermessung des Messobjekts (102) zu erstellen, wobei die Datenverarbeitungseinheit (150) mindestens eine Schnittstelle (152) umfasst, welche eingerichtet ist, um mindestens einen Solldatensatz (104) des Messobjekts (102) und mindestens ein Startmuster (122) bereitzustellen, wobei das Bereitstellen ein Erstellen einer Teilung (124) umfasst, wobei das Erstellen der Teilung (124) ein Anwenden mindestens einer Teilungsfunktion umfasst, wobei die Teilung (124) eine Mehrzahl von Teilungsindizes (126) aufweist, wobei die Datenverarbeitungseinheit (150) eingerichtet ist, um ein Zielmuster (130) zu erstellen, wobei die Datenverarbeitungseinheit (150) eingerichtet ist, um den Solldatensatz (104) und die Teilung (124) zu vergleichen, wobei die Datenverarbeitungseinheit (150) eingerichtet ist, um bei einer Abweichung der Teilung (124) von dem Solldatensatz (104) mindestens einen Teilungsindex (126) anzupassen, wobei die Datenverarbeitungseinheit (150) eingerichtet ist, um mindestens ein Element mit mindestens einer Musterinformation im Prüfplan (100) entsprechend des Zielmusters (130) anzulegen.

14. Koordinatenmessgerät (136) nach dem vorhergehenden Anspruch, wobei das Koordinatenmessgerät (136) mindestens eine Steuerung (154) aufweist, welche eingerichtet ist, mindestens eine Komponente des Koordinatenmessgeräts (136) zur Vermessung des Messobjekts (102) gemäß dem Prüfplan (100) anzusteuern.

15. Koordinatenmessgerät (136) nach einem der vorhergehenden ein Koordinatenmessgerät (136) betreffenden Ansprüche, wobei das Koordinatenmessgerät (136) eingerichtet ist, ein Verfahren zum Erstellen eines Prüfplans (100) nach einem der vorhergehenden, ein Verfahren zum Erstellen eines Prüfplans (100) betreffenden, Ansprüche und/oder ein Messverfahren nach Anspruch 10 auszuführen.

## Claims

1. Computer-implemented method for automatically producing at least one test plan (100) for measuring at least one measured object (102), wherein the method comprises the following steps:
a) providing a desired dataset (104) of the measured object (102);
b) providing a starting pattern (122), wherein the providing comprises producing a division (124), wherein the producing of the division (124) comprises applying at least one division function, wherein the division (124) has a plurality of division indices (126);
c) producing a target pattern (130), wherein the producing of the target pattern (130) comprises a comparison between desired dataset (104) and the division (124), wherein at least one division index (126) is adapted in the event of a deviation of the division (124) from the desired dataset (104);
d) creating at least one element with at least one piece of pattern information in the test plan (100) in accordance with the target pattern (130).

2. Method according to the preceding claim, wherein the desired dataset (104) is produced from at least one model of the measured object (102) and/or comprises at least one model of the measured object (102), wherein the model of the measured object (102) is and/or comprises a CAD model.

3. Method according to either of the preceding claims, wherein the desired dataset (104) has a plurality of elements (106), wherein the desired dataset (104) has special geometries (112), regular geometries (110) or a combination of special geometries (112) and regular geometries (110).

4. Method according to one of the preceding claims, wherein the adapting of the at least one division index (126) comprises masking the division index (126).

5. Method according to one of the preceding claims, wherein the desired dataset (104) has a pattern (114) containing absent positions (116), wherein the comparison comprises removing and/or deleting all the division indices (124) that correspond to the absent positions (116) in the desired dataset (104).

6. Method according to one of the preceding claims, wherein the desired dataset (104) comprises an outer contour (118).

7. Method according to the preceding claim, wherein the comparison between desired dataset (104) and division (124) comprises regarding the outer contour (118), wherein the comparison comprises removing and/or deleting all the division indices (126) outside the outer contour (118) .

8. Method according to one of the preceding claims, wherein the comparison comprises a pattern comparison between desired dataset (104) and division (124).

9. Method according to the preceding claim, wherein adapted division indices (126) are not created in the test plan (100).

10. Measurement method for measuring at least one measured object (102), wherein the measurement method comprises producing a test plan (100) according to one of the preceding claims that relate to a method for producing a test plan (100), wherein the measurement method has at least one measurement step, wherein the measurement step involves a measurement of the measured object (102) being performed in accordance with the test plan (100).

11. Computer program that, when executed on a computer or computer network, carries out one of the configurations of a method for producing a test plan according to one of the preceding claims that relate to a method for producing a test plan (100), in particular method steps a) to d), and/or of a measurement method according to the preceding claim.

12. Computer program product comprising program code means stored on a machine-readable medium, in order to perform a method for producing a test plan (100) according to one of the preceding claims that relate to a method for producing a test plan and/or a measurement method according to the preceding claim but one when the program is executed on a computer or computer network.

13. Coordinate measuring machine (136) for measuring at least one measured object (102), wherein the coordinate measuring machine (136) comprises at least one data processing unit (150), wherein the data processing unit (150) is configured to produce at least one test plan (100) for measuring the measured object (102), wherein the data processing unit (150) comprises at least one interface (152) configured to provide at least one desired dataset (104) of the measured object (102) and at least one starting pattern (122), wherein the providing comprises producing a division (124), wherein the producing of the division (124) comprises applying at least one division function, wherein the division (124) has a plurality of division indices (126), wherein the data processing unit (150) is configured to produce a target pattern (130), wherein the data processing unit (150) is configured to compare the desired dataset (104) and the division (124), wherein the data processing unit (150) is configured to adapt at least one division index (126) in the event of a deviation of the division (124) from the desired dataset (104), wherein the data processing unit (150) is configured to create at least one element with at least one piece of pattern information in the test plan (100) in accordance with the target pattern (130) .

14. Coordinate measuring machine (136) according to the preceding claim, wherein the coordinate measuring machine (136) has at least one controller (154) configured to control at least one component of the coordinate measuring machine (136) to measure the measured object (102) in accordance with the test plan (100).

15. Coordinate measuring machine (136) according to one of the preceding claims that relate to a coordinate measuring machine (136), wherein the coordinate measuring machine (136) is configured to carry out a method for producing a test plan (100) according to one of the preceding claims that relate to a method for producing a test plan (100) and/or a measurement method according to Claim 10.

## Revendications

1. Procédé mis en œuvre par ordinateur pour élaborer automatiquement au moins un plan de contrôle (100) pour le mesurage d'au moins un objet de mesure (102), le procédé comprenant les étapes suivantes :
a) fourniture d'un jeu de données de consigne (104) de l'objet de mesure (102) ;
b) fourniture d'un modèle de départ (122), la fourniture comprenant une élaboration d'une division (124), l'élaboration de la division (124) comprenant une utilisation d'au moins une fonction de division, la division (124) possédant une pluralité d'indices de division (126) ;
c) élaboration d'un modèle cible (130), l'élaboration du modèle cible (130) comprenant une comparaison entre le jeu de données de consigne (104) et la division (124), au moins un indice de division (126) étant adapté dans le cas d'un écart entre la division (124) et le jeu de données de consigne (104) ;
d) création d'au moins un élément avec au moins une information de modèle dans le plan de contrôle (100) conformément au modèle cible (130).

2. Procédé selon la revendication précédente, le jeu de données de consigne (104) étant généré à partir d'au moins un modèle de l'objet de mesure (102) et/ou comprenant au moins un modèle de l'objet de mesure (102), le modèle de l'objet de mesure (102) étant et/ou comprenant un modèle de CAO.

3. Procédé selon l'une des revendications précédentes, le jeu de données de consigne (104) possédant une pluralité d'éléments (106), le jeu de données de consigne (104) possédant des géométries spéciales (112), des géométries standard (110) ou une combinaison de géométries spéciales (112) et de géométries standard (110) .

4. Procédé selon l'une des revendications précédentes, l'adaptation de l'au moins un indice de division (126) comprenant un masquage de l'indice de division (126).

5. Procédé selon l'une des revendications précédentes, le jeu de données de consigne (104) possédant un modèle (114) avec des positions manquantes (116), la comparaison comprenant un retrait et/ou effacement de tous les indices de division (124) qui correspondent aux positions manquantes (116) du jeu de données de consigne (104).

6. Procédé selon l'une des revendications précédentes, le jeu de données de consigne (104) comprenant un contour extérieur (118).

7. Procédé selon l'une des revendications précédentes, la comparaison entre le jeu de données de consigne (104) et la division (124) comprenant une prise en considération du contour extérieur (118), la comparaison comprenant un retrait et/ou un effacement de tous les indices de division (126) en dehors du contour extérieur (118) .

8. Procédé selon l'une des revendications précédentes, la comparaison comprenant une comparaison de modèle entre le jeu de données de consigne (104) et la division (124).

9. Procédé selon l'une des revendications précédentes, les indices de division (126) adaptés n'étant pas créés dans le plan de contrôle (100).

10. Procédé de mesure pour le mesurage d'au moins un objet de mesure (102), le procédé de mesure comprenant une élaboration d'un plan de contrôle (100) selon l'une des revendications précédentes, concernant un procédé pour élaborer un plan de contrôle (100), le procédé de mesure possédant au moins une étape de mesure, un mesurage de l'objet de mesure (102) selon le plan de contrôle (100) étant effectué dans l'étape de mesure.

11. Programme informatique qui, lors de l'exécution sur un ordinateur ou un réseau d'ordinateurs, met en œuvre, dans l'une de ses configurations, un procédé pour élaborer un plan de contrôle selon l'une des revendications précédentes, concernant un procédé pour élaborer un plan de contrôle (100), notamment les étapes a) à d), et/ou un procédé de mesure selon la revendication précédente.

12. Produit de programme informatique comprenant des moyens de code de programme enregistrés sur un support lisible par machine afin de mettre en œuvre un procédé pour élaborer un plan de contrôle (100) selon l'une des revendications précédentes, concernant un procédé pour élaborer un plan de contrôle, et/ou un procédé de mesure selon la revendication précédente selon la revendication précédente, lorsque le programme est exécuté sur un ordinateur ou un réseau d'ordinateurs.

13. Appareil de mesure de coordonnées (136) pour le mesurage d'au moins un objet de mesure (102), l'appareil de mesure de coordonnées (136) comprenant au moins une unité de traitement de données (150), l'unité de traitement de données (150) étant conçue pour élaborer au moins un plan de contrôle (100) pour le mesurage de l'objet de mesure (102), l'unité de traitement de données (150) comprenant au moins une interface (152), laquelle est conçue pour fournir au moins un jeu de données de consigne (104) de l'objet de mesure (102) et au moins un modèle de départ (122), la fourniture comprenant une élaboration d'une division (124), l'élaboration de la division (124) comprenant une utilisation d'au moins une fonction de division, la division (124) possédant une pluralité d'indices de division (126), l'unité de traitement de données (150) étant conçue pour élaborer un modèle cible (130), l'unité de traitement de données (150) étant conçue comparer le jeu de données de consigne (104) et la division (124), l'unité de traitement de données (150) étant conçue pour, dans le cas d'un écart entre la division (124) et le jeu de données de consigne (104), adapter au moins un indice de division (126), l'unité de traitement de données (150) étant conçue pour créer au moins un élément avec au moins une information de modèle dans le plan de contrôle (100) conformément au modèle cible (130).

14. Appareil de mesure de coordonnées (136) selon la revendication précédente, l'appareil de mesure de coordonnées (136) possédant au moins une commande (154), laquelle est conçue pour commander au moins un composant de l'appareil de mesure de coordonnées (136) en vue du mesurage de l'objet à mesurer (102) conformément au plan de contrôle (100).

15. Appareil de mesure de coordonnées (136) selon l'une des revendications précédentes concernant l'appareil de mesure de coordonnées (136), l'appareil de mesure de coordonnées (136) étant conçu pour mettre en œuvre un procédé d'élaboration d'un plan de contrôle (100) selon l'une des revendications précédentes concernant un procédé d'élaboration d'un plan de contrôle (100) et/ou un procédé de mesure selon la revendication 10.
